# FASCICULE DE BREVET EUROPEEN

(11) **EP 1 010 137 B1**
(45) Date de publication et mention de la délivrance du brevet: **05.12.2001**
(21) Numéro de dépôt: 98930817.6
(22) Date de dépôt: 09.06.1998
(51) Int. Cl.: G06K 19/073

(54) **PROCEDE POUR LA PROTECTION PHYSIQUE DE L'ECHANGE DE DONNEES CONFIDENTIELLES**
VERFAHREN ZUM PHYSISCHEN SCHUTZ BEIM AUSTAUSCH VON VERTRAULICHEN DATEN
METHOD FOR THE PHYSICAL PROTECTION OF CONFIDENTIAL DATA EXCHANGE

(30) Priorité: 09.06.1997 FR 9707129
(43) Date de publication de la demande: 21.06.2000
(73) Titulaire: CKD S.A., 92024 Nanterre Cedex (FR)
(72) Inventeur: BONNEMOY, Marc, F-92000 Nanterre (FR)
(74) Mandataire: Breese, Pierre
(86) Numéro de dépôt international: FR9801201
(87) Numéro de publication internationale: WO9857297

(56) Documents cités:
- WO-A-96/16378
- DE-C- 19 511 775

## Description

La présente invention concerne un procédé pour la protection physique de l'échange de données confidentielles, ainsi qu'un équipement mettant en oeuvre ledit procédé.

Il concerne le domaine des terminaux informatiques sécurisés à l'aide d'algorithmes de cryptage tels que RSA, DES, etc.... Les applications concernent de nombreux domaines, dont notamment la monétique, le commerce électronique et l'échange de données informatisées, le contrôle d'accès.

Ces algorithmes sont mis en oeuvre dans des microcircuits comprenant une mémoire stockant les instructions pour leur mise en oeuvre. A titre d'exemple la demande de brevet européen EP-A-0 119 972 décrit un équipement de chiffrage et déchiffrage de messages numériques basés sur le principe des « clés tournantes ».

Ce circuit comprenant : a) une pluralité de registres de circulation, dont le contenu original de un et zéros est prédéterminé par une clé interne, b) des moyens pour condenser les registres de circulation afin d'obtenir des impulsions de sortie de ces registres de circulation et C) un circuit logique pour générer des séries pseudo-hasardeuses sur la base des impulsions de sortie des registres de circulation pour chiffrer / déchiffrer les messages, caractérisé en ce que le circuit logique est adapté à émettre des impulsions de contrôle pseudo-hasardeuses pour modifier l'avancement normal et/ou le contenu des registres de circulation.

On connaît dans l'état de la technique des équipements comportant des micro-circuits dédiés aux fonctions de cryptage. Le risque subsiste qu'un tiers indélicat n'analyse les signaux d'entrée et de sortie pour tenter de déchiffrer la clé de cryptage, ou d'obtenir des informations permettant de détourner les moyens de cryptage. Pour limiter ce risque, on a réalisé des microcircuits dont la mémoire est rendue inaccessible. Néanmoins, l 'analyse des signaux d'entrée et de sortie n'empêche pas totalement le piratage.

On a proposé dans l'état de la technique, pour pallier ce risque, d'encapsuler les composants. Toutefois, il est apparu que les résines d'encapsulage pouvaient être altérées et que le contact avec les liaisons électriques des composants de sécurité n'était pas totalement évitée.

Le but de l'invention est de remédier à ces inconvénients en proposant un procédé tel que défini à la revendication 1.

Ce procédé interdit l'accès au microcircuit dédié, sauf à détruire la carte principale et /ou le moyen de saisie des informations confidentielles.

Avantageusement, les liaisons électriques entre le microcircuit et le circuit comportant les moyens de saisie des données confidentielles est réalisé par une colle conductrice.

Selon une première variante, le scellement est réalisé à l'aide d'un vernis isolant.

Selon une deuxième variante, le scellement physique est réalisé à l'aide d'un intercalaire isolant présentant une découpe de forme complémentaire à la forme du microcircuit, ledit intercalaire étant collé sur les surfaces intérieures du circuit comportant les moyens de saisie des données confidentielles et du circuit complémentaire.

L'invention concerne également un équipement. sécurisé comportant un moyen de saisie d'une information confidentielle, un circuit principal de traitement informatique et un microcircuit dédié au cryptage de l'information confidentielle, caractérisé en ce que ledit microcircuit est scellé entre le moyen de saisie de l'information confidentielle et le circuit principal.

L'invention sera mieux comprise à la lecture de la description qui suit, se référant aux figures annexées où :

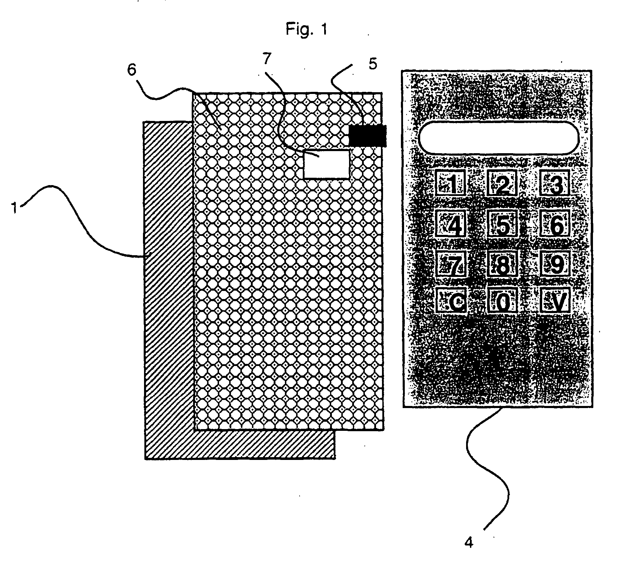

- la figure 1 représente une vue éclatée d'un équipement selon l'invention ;
- la figure 2 représente une vue en coupe de cet équipement.
- L'équipement selon un exemple de réalisation de l'invention est constitué par un circuit imprimé principal (1), par exemple un circuit multicouche, présentant des trous métallisés. Les composants 2, 3), par exemple des circuits intégrés, des résistances etc. sont soudés sur la face extérieure seulement du circuit imprimé (1).

Le moyen de saisie (4) est dans l'exemple décrit constitué par un clavier. Il pourrait être constitué par tout autre moyen, par exemple un capteur d'empreinte, une carte vocale, une tablette graphique, etc...

Les composants du moyen de saisie, notamment les contacteurs et les composants électroniques sont soudés sur la face extérieure seulement du circuit imprimé (4).

Le circuit imprimé est un circuit double-face, dont la face arrière présente des zones de contacts métalliques pour la liaison avec le microcircuit dédié (5).

Le microcircuit dédié (5) est collé sur la face arrière du circuit imprimé (4) à l'aide d'une colle conductrice.

Un intercalaire (6) est disposé entre le circuit imprimé principal (1) et le circuit de saisie (4). Cet intercalaire (6) est réalisé en un matériau isolant d'une épaisseur sensiblement égale à l'épaisseur du microcircuit (5). Il présente une fenêtre (7) d'une dimension complémentaire à celle du microcircuit (5).

Cet intercalaire est collé sur les surfaces intérieures des deux circuits imprimés de façon définitive. Ainsi, l'accès au circuit dédié (5) n'est possible qu'après destruction du « sandwich » formé par les deux circuits imprimés et l'intercalaire.

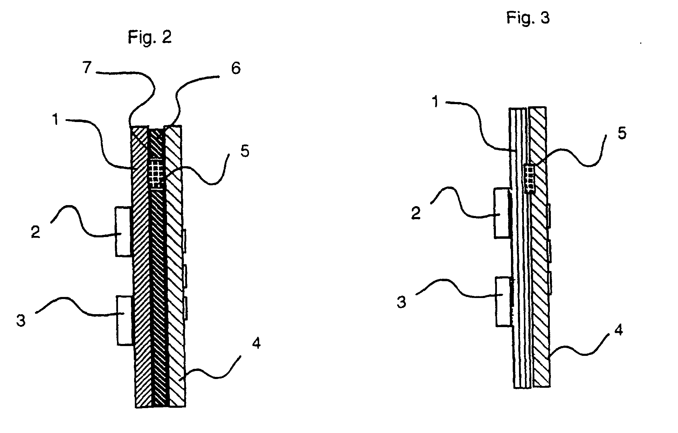

Selon un mode de réalisation préféré représenté en figure 3, le microcircuit dédié (5) et le circuit de saisie des informations confidentielles forment un circuit imprimé multicouches réalisé par pressage à chaud.

## Revendications

1. Procédé pour la protection physique de l'échange de données confidentielles entrées par des moyens de saisie, mettant en oeuvre le traitement de données confidentielles par un calculateur réalisé sous forme de microcircuit (5), délivrant une information cryptée à un circuit imprimé principal de traitement informatique, **caractérisé en ce que** l'on procède au scellement physique du microcircuit (5) entre un circuit (4) comportant les moyens de saisie des données confidentielles, et le circuit imprimé principal (1).

2. procédé selon la revendication 1 **caractérisé en ce que** les liaisons électriques entre le microcircuit (5) et le circuit comportant les moyens de saisie des données confidentielles est réalisé par une colle conductrice.

3. Procédé selon la revendication 1 ou 2 **caractérisé en ce que** le scellement est réalisé à l'aide d'un vernis isolant.

4. Procédé selon la revendication 1 ou 2 **caractérisé en ce que** le scellement est réalisé par pressage à chaud, sous forme de circuit imprimé multicouches incorporant le microcircuit (5) unique.

5. Procédé selon l'une quelconque des revendications précédentes **caractérisé en ce que** le scellement physique est réalisé à l'aide d'un intercalaire (6) isolant présentant une découpe de forme complémentaire à la forme du microcircuit (5), ledit intercalaire (6) étant collé sur les surfaces intérieures du circuit comportant les moyens de saisie des données confidentielles et du circuit complémentaire.

6. Équipement sécurisé comportant un moyen de saisie (4) d'une information confidentielle, un circuit immprimé principal (1) de traitement informatique et un microcircuit (5) dédié au cryptage de l'information confidentielle reçue du moyen de saisie (4) et délivrée cryptée au circuit imprimé principal (1), **caractérisé en ce que** ledit microcircuit (5) est scellé entre le moyen de saisie (4) de l'information confidentielle et le circuit imprimé principal.

7. Équipement sécurisé selon la revendication 6, **caractérisé en ce que** ledit microcircuit (5) est collé avec une colle conductrice sur les zones de contact correspondant du moyen de saisie des informations confidentielles.

8. Équipement sécurisé selon la revendication 6 ou 7, **caractérisé en ce que** le microcircuit (5) est logé dans un intercalaire (6) isolant présentant une découpe de forme complémentaire, et une épaisseur sensiblement égale à celle du microcircuit (5).

9. Équipement sécurisé selon la revendication 6 ou 7, **caractérisé en ce que** le circuit imprimé principal est collé sur le moyen de saisie avec un vernis isolant.

10. Équipement sécurisé selon la revendication 6 ou 7, **caractérisé en ce que** le circuit imprimé principal, le microcircuit dédié (5) et le circuit de saisie des informations confidentielles forment un circuit imprimé multicouches.

## Patentansprüche

1. Verfahren für den physischen Schutz des Austauschs vertraulicher Daten, die durch Mittel zur Datenerfassung eingegeben werden, wobei die Verarbeitung der vertraulichen Daten durch einen Rechner in Form einer Mikroschaltung (5) vorgenommen wird, der eine verschlüsselte Information auf einen gedruckten Hauptstromkreis für Datenverarbeitung gibt, **dadurch gekennzeichnet, dass** man die Mikroschaltung (5) zwischen einer Schaltung (4) mit den Mitteln zur Erfassung der vertraulichen Daten und dem gedruckten Hauptstromkreis (1) einlässt.

2. Verfahren nach Anspruch 1, **dadurch gekennzeichnet, dass** die elektrischen Verbindungen zwischen der Mikroschaltung (5) und der Schaltung mit den Mitteln zur Erfassung der vertraulichen Daten durch einen leitfähigen Kleber ausgeführt werden.

3. Verfahren nach Anspruch 1 oder 2, **dadurch gekennzeichnet, dass** die Mikroschaltung mit Hilfe eines Isolierlacks eingelassen wird.

4. Verfahren nach Anspruch 1 oder 2, **dadurch gekennzeichnet, dass** die Mikroschaltung durch Heißpressen in Form einer Mehrlagenplatte eingelassen wird, die nur die eine Mikroschaltung (5) umfasst.

5. Verfahren nach irgendeinem der vorsogenannten Ansprüche, **dadurch gekennzeichnet, dass** das Ein- lassen mit Hilfe eines isolierenden Zwischenstücks (6) vorgenommen wird, das so geformt ist, dass es die Komplementärform der Mikroschaltung (5) darstellt, wobei das sogenannte Zwischenstück (6) auf die Innenflächen der Schaltung geklebt wird, welche die Mittel zur Erfassung der vertraulichen Daten und die Mittel für die Komplementärschaltung enthält.

6. Gesicherte Ausrüstung bestehend aus einem Mittel zur Erfassung (4) einer vertraulichen Information, einem gedruckten Hauptstromkreis (1) für Datenverarbeitung und einer Mikroschaltung (5), die für die Verschlüsselung der vertraulichen Information bestimmt ist, welche vom Mittel zur Datenerfassung (4) entgegengenommen und verschlüsselt an den gedruckten Hauptstromkreis (1) gegeben wird, **dadurch gekennzeichnet, dass** die sogenannte Mikroschaltung (5) zwischen dem Mittel zur Erfassung (4) der vertraulichen Information und dem gedruckten Hauptstromkreis eingelassen wird.

7. Gesicherte Ausrüstung nach Anspruch 6, **dadurch gekennzeichnet, dass** die sogenannte Mikroschaltung (5) an denjenigen Kontaktflächen mit einem leitfähigen Kleber geklebt wird, die dem Mittel zur Erfassung der vertraulichen Informationen entsprechen.

8. Gesicherte Ausrüstung nach Anspruch 6 oder 7, **dadurch gekennzeichnet, dass** die Mikroschaltung (5) sich in einem isolierenden Zwischenstück (6) befindet, das als Komplementärform und in genauer Dicke der Mikroschaltung (5) ausgeführt ist.

9. Gesicherte Ausrüstung nach Anspruch 6 oder 7, **dadurch gekennzeichnet, dass** der sogenannte gedruckte Hauptstromkreis mit einem Isolierlack auf das Mittel zur Datenerfassung geklebt wird.

10. Gesicherte Ausrüstung nach Anspruch 6 oder 7, **dadurch gekennzeichnet, dass** der gedruckte Hauptstromkreis, die zugehörige Mikroschaltung (5) und die Schaltung für die Erfassung der vertraulichen Informationen zusammen eine Mehrlagenplatte bilden.

## Claims

1. A method for physically protecting exchange of confidential data entered through input means, implementing the processing of confidential data by a computer produced as a microcircuit (5), delivering encrypted information to a main computer processing printed circuit, **characterized in that** physical sealing of the microcircuit (5) is performed between a circuit (4) including means for inputting confidential data, and the main printed circuit (1).

2. The method according to claim 1 **characterized in that** the electrical connections between the microcircuit (5) and the circuit including the means for inputting confidential data are produced by means of a conducting adhesive.

3. The method according to claim 1 or 2 **characterized in that** the sealing is produced by means of an insulating varnish.

4. The method according to claim 1 or 2 **characterized in that**, the sealing is produced by hot pressing, as a multilayer printed circuit incorporating the unique microcircuit (5).

5. The method according to any of the preceding claims **characterized in that** the physical sealing is produced by an insulating spacer (6) having a cutout profile with a shape complementary to the shape of the microcircuit (5), wherein said spacer (6) is adhered on the inner surfaces of the circuit including means for inputting confidential data and of the complementary circuit.

6. Equipment provided with security including a means (4) for inputting confidential information, a main computer processing printed circuit (1) and a microcircuit (5) dedicated to the encryption of confidential information received from the inputting means (4) and delivered encrypted to the main printed circuit (1), **characterized in that** said microcircuit (5) is sealed between the means (4) for inputting confidential information and the main printed circuit.

7. The equipment provided with security according to claim 6, **characterized in that**, said microcircuit (5) is adhered with a conducting adhesive onto the corresponding contact areas of the means for inputting confidential data.

8. The equipment provided with security according to claim 6 or 7, **characterized in that** the microcircuit (5) is housed in an insulating spacer (6) having a cutout profile of complementary shape and a thickness substantially equal to that of the microcircuit (5).

9. The equipment provided with security according to claim 6 or 7, **characterized in that** the main printed circuit is adhered onto the inputting means with an insulating varnish.

10. The equipment provided with security according to claim 6 or 7, **characterized in that** the main printed circuit, the dedicated microcircuit (5) and the circuit for inputting confidential information form a multilayer printed circuit.
